# EUROPEAN PATENT SPECIFICATION

(11) **EP 4 287 839 B1**
(45) Date of publication and mention of the grant of the patent: **24.12.2025**
(21) Application number: 22702718.2
(22) Date of filing: 28.01.2022
(51) Int. Cl.: A23G 3/20, A21C 15/00, A23G 3/28

(54) **A CAKE DECORATING SYSTEM**
KUCHENDEKORIERSYSTEM
SYSTEME A LA DECORATION DE GATEAUX

(30) Priority: 10.02.2021 GB 202101846; 01.06.2021 GB 202107799
(43) Date of publication of application: 13.12.2023
(73) Proprietor: Coyle, Emily, Kildare (IE); Coyle, Paul, Kildare (IE)
(72) Inventor: Coyle, Emily, Kildare (IE); Coyle, Paul, Kildare (IE)
(74) Representative: Tomkins & Co
(86) International application number: PCT/EP2022/052135
(87) International publication number: WO 2022/171464

(56) References cited:
- WO-A1-2006/066349
- WO-A1-2011/143697
- WO-A1-2012/049467
- DE-U1- 202004 013 423
- GB-A- 1 221 292
- GB-A- 2 439 715
- US-A- 3 537 866
- LEIGH ET AL: "BBC Food Techniques : How to line a round cake tin", FOOD TECHNIQUES, 20 October 2012 (2012-10-20), UK, XP055906153, Retrieved from the Internet <URL:https://web.archive.org/web/20121020025338/https://www.bbc.co.uk/food/techniques/how_to_line_a_round_cake_tin>

## Description

### Field of the Invention

The present invention relates to a cake decorating system.

### Background to the Invention

In the preparation of cakes and confectionary it is known that an icing, also called frosting, can be applied to the cake for decorative purposes or as a flavoured layer. There are a number of types of icing, for example royal icing (made from egg white and sugar), fondant (made from heated water and sugar which commonly has stabilisers such as gelatine added), buttercream (made by creaming fats and sugar) and ganache (made from chocolate and cream).

The method of application of icing depends on the type and texture of the icing being used. For example fondant may be rolled to form a sheet and draped over the cake. Icings such as royal icing, buttercream, and ganache may be applied to a cake by applying the icing with a knife or spatula, or by piping the icing onto the cake and smoothing the icing with a knife or spatula.

Icing may be applied to the sides of the cake, the top of the cake or both the sides and the top such that the cake is completely enveloped in icing. Ideally the icing on the sides and/ or top of the cake forms a smooth layer wherein the sides are smooth and the top of the cake is flat. Where the sides of the cake meet the top of the cake the corners are ideally sharp, well defined, and uniform.

Icing a cake using a knife or spatula and achieving ideal icing on the sides, top, and corners takes considerable time and skill. For example it can be difficult to apply a uniform thickness, achieve an even surface, and/or achieve a uniform transition on an edge e.g. on an edge between a top and side surface.

It may be desirable to form a three dimensional pattern from the icing when it is applied to a cake. For example it may be desirable to have raised or sunken areas of icing which project from or into the icing of the cake. Three dimensional icing decorations may be desirable for decorative reasons. Applying icing in a three dimensional pattern requires considerable time and skill. For example it may be difficult to form the raised or sunken areas to have a uniform height or depth.

It would be beneficial to provide a system to reduce the time and skill required to ice a cake and achieve excellent results.

Methods and moulds for icing cakes previously disclosed include US 3537866A1, which discloses a method of producing a whipped cream layer cake within an open-ended container which serves as a form of mold for the building and frosting of the cake therein. A layer of cake is placed within the container followed by a layer of whipped cream and a second layer of cake. The second cake layer is then pressed clown to extrude a portion of the whipped crearn from between the layers into the space provided between the cake sides and the container sidewall to cover the sides of the cake. Successive layers of whipped cream and cake are added followed by the requisite tamping action until a cake of the desired amount of layers is produced. A topping is then placed on the cake, after which the container is closed and the cake frozen.GB 1221292A also discloses a method and mould for icing cakes, wherein a cake is iced by casting the icing in a flexible mould apertured with moisture evaporation holes to a density of not less than 8 holes per square inch, sticking the icing to a cake by a layer of edible adhesive and stripping the mould from the icing.

Cake tins having a removable base are known and include those disclosed in DE 202004013423U1, WO 2012/049467A1, and WO 2006/066349A1.

Liners for cake tins are also known and include those discussed in WO 2011/143697A1, which discloses a tin liner intended to cover the entire inner surface of a baking tin and provide a seal against leakage of the mixture baked in the tin, and GB 2439715A, which discloses a reusable liner formed from a single piece of material and a method for using the liner to line a cake tin.

### Summary of the Invention

In one aspect, the present invention provides a cake icing system comprising:
(a) a mould comprising a mould wall having a top end and a bottom end and a height defined therebetween, the mould wall having an inner surface which defines the width and the length of the mould, the inner surface having a perimeter length, the mould wall having a support surface at the bottom end of the mould,
(b) a base with a width which is less than the width of the mould, a length which is less than the length of the mould, a top surface, a bottom surface, and a side surface therebetween, wherein the height of the side surface is less than the height of the mould wall and the base is removable and insertable into the mould,
(c) a liner having a thickness, a height and a length, wherein the length is greater than length of the perimeter of the mould wall,

wherein, when the system is in use, the base sits on the support surface of the mould, and
the liner engages the inner wall of the mould, such that that an icing composition can be applied between the liner and a cake inserted in the mould,
wherein when in use the side surface (206) of the base (200) retains the liner (300) against the inner surface (104) of the mould wall (102), and
wherein the mould (100) and the liner (300) are transparent to visible light.

In the cake icing system of the invention the mould comprises a mould wall having a top end and a bottom end and a height defined therebetween. The mould may be substantially cylindrical. For example when viewed from the top end or the bottom end the mould appears circular or oval. The mould may be triangular, square, hexagonal, or any other suitable shape when viewed from the top end or the bottom end the mould. The mould wall defines the walls of the mould. The mould is typically open, that is the top end and the bottom end may be open. The bottom end of the mould may be closed. The top end is open to provide an orifice through which the base can be removed and inserted.

The mould wall has an inner surface which defines the length and width of the mould. The length and width of the mould will be greater than the length and width of the cake which is to be iced using the cake icing system. The length and width of the mould may be equal, for example wherein the mould is circular or square in shape. The length and width of the mould may be unequal, for example wherein the mould is rectangular in shape. The inner surface has a perimeter length which defines the length of the perimeter formed by the inner wall of the mould. For example when the mould is circular or oval in shape the perimeter length is the circumferential length of the inner wall, when the mould is square, rectangular, or hexagonal the perimeter length is the sum of the length of each side of the inner surface of the mould wall.

The mould wall has a support surface at the bottom end of the mould. The support surface supports the base when the system is in use. The support surface may be a rim at the bottom end of the mould, the rim being configured to project away from the inner surface of the mould wall toward the centre of the mould. The rim may be positioned adjacent the bottom end of the mould. The rim may form a lip around the bottom end of the mould. Beneficially when the support surface comprises a rim, the rim forms the boundary of an aperture in the bottom end of the mould. The aperture may be used to push the cake out of the mould after icing has been applied to the cake.

Wherein the mould has a bottom end which is closed the support surface may be the closed bottom end of the mould. Wherein the bottom end of the mould is closed the support surface may be a rim positioned adjacent to the bottom end of the mould, the rim being configured to project away from the inner surface of the mould wall toward the centre of the mould.

Beneficially the base can sit on the support surface such that the support surface supports the base. This allows the cake icing system to be moved while in use. The user can pick up the cake icing system and the base will be supported within the mould because the base is sitting on the support surface.

Wherein the support surface is a rim, the rim may be contiguous around the bottom of the inner surface of the mould wall. Alternatively the rim may be discontinuous, for example segmented, so long as it supports the base when the base sits on the rim in use. The rim may be at the terminal bottom end of the mould. The rim may be positioned such that it is not at the terminal end. When the support surface is a rim the rim will be closer to the bottom end of the mould than to the top end of the mould.

In the cake icing system of the invention the mould may be rigid. The mould wall may be rigid. The support surface may be rigid. Beneficially the rigidity of the mould wall may provide support to the liner when the liner engages with the inner wall of the mould. Beneficially the rigidity of the support surface may support the base when the base is sitting on the rim.

In the cake icing system of the invention the base has a width which is less than the width of the mould, a length which is less than the length of the mould, a top surface, a bottom surface, and a side surface therebetween. The base may be substantially the same shape as the mould, for example circular, oval, triangular, square or hexagonal shaped. The top surface and the bottom surface may be the same dimensions. Alternatively the base may be T-shaped in cross section such that the top surface has a larger surface area than the surface area of the bottom surface.

The base has a width which is less than the width of the mould and a length which is less than the length of the mould. The base has a top surface. The base can be inserted into the mould such that the side surface of the base is parallel with the mould wall. The base may be inserted into the mould so that there is a gap between the side surface of the base and the inner wall of the mould. This gap may be suitable for retaining the liner so that the liner engages the inner wall of the mould. In general the base will provide a planar support surface for a cake.

The height of the side surface of the base is less than the height of the mould wall. Accordingly, with the base inserted into the mould when the cake icing system is in use the top surface of the base is below the top end of the mould. The cake which is to be iced using the cake icing system sits on the top surface of the base. The cake is therefore positioned within and below the top end of the mould. It is advantageous that the cake extends above the top end of the mould in which case only a lower portion of the cake may be below the top end of the mould.

It will appreciated that the cake may comprise a plurality of layers, for example two or three or four or more layers. Optionally a filling is provided between adjacent layers. Whether or not the cake is layered it will be considered as a cake for the purposes of the use of the system of the present invention to apply an icing to it.

The base of the system is desirably removable and insertable into the mould. Beneficially this allows a cake to be positioned on the top surface of the base when the base is not in the mould. The base which has a cake positioned on the top surface can then be inserted into the mould.

The liner has a thickness. The liner has a length which is greater than the length of the perimeter of the mould wall. Beneficially the liner has a thickness which is thick enough to provide the liner with a stability when engaged with the mould wall such that the liner retains its shape when the icing composition is applied. The liner may have a thickness which makes the liner suitable for being retained in a gap between the side surface of the base and the inner wall of the mould such that the liner engages the inner wall of the mould. Beneficially, the length of the liner being greater than the perimeter length of the mould wall, means that the liner engages the entire inner surface mould wall. The ends of the liner between which the length is defined may overlap when in use where the length is greater than the perimeter length of the mould wall. The liner may for example be bendable into a generally cylindrical form. The liner may have creases therein to allow the liner to be folded to form the same shape as the mould.

The liner may have a height greater than the height of the mould wall. Beneficially the liner may have a height that allows it to project above the mould wall even when in contact with the base. The height of the liner may be greater than the height of the mould wall. This allows the cake icing system to work for cakes with a greater height than mould. The liner prevents the icing from adhering to the mould.

The liner may be resiliently deformable so that when inserted into the mould it tends to be biased by its resilience against the mould wall. In this way its resilience can be used to hold it in place. The liner may have one or more retaining means, for example a catch or inter-engaging formations, which hold the liner in one or more cylinders of differing sizes/cross-sectional areas, for example by holding the liner in positions of differing amounts of overlap.

When the cake icing system is in use the base sits on the support surface of the mould. For example, the bottom surface of the base may sit on the support surface of the mould.

When the cake icing system is in use the liner engages the inner wall of the mould so that the liner may contact a substantial portion of, and desirably substantially all of, the inner surface of the mould wall. Beneficially when the liner is engaged with the inner surface of the mould there is a small gap present between the cake being iced and the liner. The icing can therefore be applied between the liner and a cake inserted in the mould. Beneficially the liner acts as a barrier which holds the icing in position until the icing has set. Beneficially the liner may have a height greater than the cake to be iced such that the cake may be completely enveloped in icing if required. The icing being set means that the icing will retain its shape once the cake is removed from the cake icing system. The icing will not flow under its own weight when set. The liner of the cake icing system contacts the icing. The liner is removable from the cake once the icing has set. Without the liner the mould of the cake icing system would otherwise likely adhere to set icing and damage the set icing when the cake is removed from the cake icing system.

The use of the cake icing system of the invention may allow the user of the system to envelope the cake in icing. The cake icing system of the invention makes it simpler for a user of the system to ice the sides and/ or top of the cake and form a smooth layer. The liner provides a smooth surface which acts to define a smooth boundary so the icing when it sets with be smooth on the sides. The liner is removable from the set icing without damaging the set icing. The icing composition will not stick to the liner as doing so would cause damage to the icing when the liner was removed, for example the liner is not baking paper, parchment paper or the like, to which an icing composition will stick. The set icing will remain in a smooth layer once the liner is removed. The height of the liner may extend above the top of the cake to make it easier for the user to use a spatula or other implement to flatten the icing on top of the cake such that the top of the cake is flat. The ease of creating smooth sides and a flat top allows where the sides of the cake meet the top of the cake for the corner to be sharp, well defined, and uniform.

The liner may comprises at least one raised section on the side of the liner opposite to the side which engages the mould wall. This is the side of the liner which faces the cake when the cake icing system is in use. The liner will be smooth where it does not comprise the raised section. The raised section may be smooth or may have a pattern formed on its surface. The raised section allows a sunken pattern to be formed in the smooth surface of the icing. The raised section projects from the liner and, when icing is applied between the liner and the cake the raised section prevents the icing from flowing into the area occupied by the raised section. The icing, when it sets, will form a smooth surface where the liner is smooth between the raised sections. Beneficially this allows the cake icing system to be used to quickly and easily form sunken patterns in the icing which is applied to a cake.

The raised section may be detachably attached to the liner. For example the raised section may be formed from a flexible tacky material which is cut to the shape desired. For example cut to form letters, numbers, or another design. The raised section may be formed from a non-tacky material and a separate tacky material may be used to detachably attach the raised section to the liner. Beneficially the flexibility of the raised section allows the section to conform to the liner. Beneficially this allows the same liner to be used to form completely smooth icing or when the raised section is attached to form a pattern.

The raised section may be integrally formed from the liner, for example the liner may be moulded or stamped to form the raised sections. Beneficially when the raised section being integrally formed from the liner means that the design is reproducible across numerous cakes as the liner can be reused.

The liner may comprise at least one sunken section on the side of the liner opposite to the side which engages the mould wall. The sunken sections may be integrally formed from the liner, for example the liner may be moulded or stamped to form the sunken sections. The sunken sections may not extend completely through the liner as it is beneficial that an icing composition does not contact the mould when it is setting. The icing composition contacting the mould may lead to the icing composition becoming stuck to the mould and being damaged when the liner is removed. The icing composition will not stick to the liner.

The liner may be reversible, such that is the liner may comprise raised sections on one side which are matched by identical sunken sections on the other side. For example when the liner is stamped to form a raised section a sunken section will also be formed. The liner can therefore be reversed and either the raised or sunken section can be chosen to be the side which engages the mould wall.

When the cake icing system of the invention is in use the base is sitting on the support surface of the mould and the side surface of the base may retain the liner against the inner surface of the mould wall. The side surface of the base is suitable for retaining the liner against the inner surface of the mould wall. The height of the side surface of the base may make the base suitable for retaining the liner against the inner surface of the mould wall. The side surface of the base may have a suitable height so that the side surface of the base and the inner surface of the mould wall may act together retain the liner in place so that the liner engages the inner wall of the mould. For example both the side surface of the base and the inner wall of the mould may be both in contact with opposite sides of the liner to retain the liner such that the liner engages with the inner wall of the mould. Beneficially there may be a gap between the side surface of the base and the inner surface of the mould wall into which the liner can be inserted. The liner may have a suitable thickness so that the thickness of the liner makes the liner suitable for being retained in such a gap. The base may aid retention of the liner in position to prevent the liner from slipping or moving while the cake is being iced.

The liner of the invention may be a pliable sheet, for example a rectangular or square sheet. Beneficially the liner having straight sides and right angles aids the liner correctly engage the inner wall of the mould such that the icing composition can be applied between the liner and the cake. The liner may have at no creases. The liner may have creases which provide lines along which the liner can be folded.

When the cake icing system of the invention is in use the liner may sit on the support surface of the mould. Beneficially the liner sitting on the support surface of the mould may provide stability to the liner such that the liner is prevented from slipping or moving while the cake is being iced.

The mould and the liner are transparent to visible light. The base, may be transparent to visible light. This allows the user to observe the application of the icing to prevent gaps in the icing. Gaps in the icing are to be avoided.

The liner may comprise a retaining member to retain the liner against the inner surface of the mould wall. The retaining member may be positioned at the end of the liner which extends above the height of the mould wall. The retaining member may releasably join the liner to itself. That is when the liner is engaged with the inner surface of the mould wall there will be a portion of the liner which overlaps because the liner length is greater than the perimeter length of the mould wall. The retaining member may be positioned in this overlap area. When the retaining member joins the liner to itself this provides additional stability to the cake icing system of the invention.

The length and/ or width of the cake mould may be from 5 cm to 60 cm. The length and/ or width of the cake mould may be matched to the size of the cake which is to be iced. Typical cake lengths and/ or widths are from 5 cm to 60 cm.

The height of the mould wall may be from 2.5 cm to 35 cm. Suitably, the height of the mould wall provides stability to the liner when the system is in use.

The height of the side surface of the base may be from 2 cm to 8 cm. Suitably the height of the side surface of the base will be chosen such that the height of the side surface of the base is not greater than the height of the mould walls. The height of the side surface of the base may be chosen such that the height is suitable for retaining the liner against the inner surface of the mould wall. The height of the side surface of the base may be thicker than the thickness of the mould walls.

The height of the liner may be from 2.5 cm to 40 cm. The height of the liner may be greater than the height of the mould wall. The height of the liner may be greater than the height of a cake to be iced using the system of the present invention.

The liner of the present invention may have a thickness of from 0.1 cm to 1 cm. Suitably the liner having a thickness of greater than 0.1 cm means that the liner has the strength to allow an icing composition to be applied between a cake and the liner without the liner deforming. Suitably the liner having a thickness of less than 1 cm means that the liner is pliable such that it can be bent and engaged with the inner surface of the mould wall.

In the cake icing system of the present invention the mould, the base and/ or the liner may be made from a polymer material. Preferably the polymer material is a food safe polymer material. The polymer material may be transparent to visible light.

The cake icing system comprising the mould, the base, and the liner, may be provided in the form of a kit.

The cake icing system may comprise a stencil which is engagable with the liner such that the stencil is nested in cake icing system between the liner and the cake when the system is in use. The stencil may be formed by cutting out a pattern from a liner of the invention. The stencil may have any of the features of the liner as described herein.

The cake icing system may comprise a stencil which is engagable with the liner such that when the system is in use the stencil engages with the side of the liner which is opposite to the side of the liner which engages the inner wall of the mould.

The stencil may be a thin sheet from which a design has been cut out. The design which has been cut out may be any suitable design, for example the design may comprise linear and/ or non-linear elements. The cut out sections may be completely cut out so that a through hole is formed or may be partially cut out so that no through hole is formed.

The stencil has a thickness. The thickness may be from is from 0.1 cm to 1 cm. Beneficially the thickness of the stencil is thick enough to provide stability to the stencil when it is engaged with the liner. Beneficially the thickness of the stencil is thin enough so as an icing composition can be applied between the liner and the cake inserted into the mould and the sides of the cake may still be covered with the icing composition. When the cake icing system is in use the stencil is not so thick as to contact the cake when the cake is in the mould. The gap which is formed between the cake and the liner is reduced where the liner is present and not cut out. The gap is not reduced by the liner at the places where the design is cut out from stencil. When an icing composition is applied between the liner and the cake inserted into the mould that the icing composition will flow into the gap and the difference thicknesses formed by the cut outs from the stencil allows the cake to be iced with a raised three dimensional design.

The stencil may have a length which is greater than the length of the perimeter of the mould wall. Beneficially this allows the stencil to engage with the entire side of the liner with which the liner engages when in use. Beneficially this allows the design of the stencil to be stencilled onto the complete outer sides of the cake.

The stencil may have a height which is greater than the height of the mould wall. Beneficially this allows the stencil to be used to stencil designs on cakes which are taller than the height of the mould.

The stencil may sit on the top surface of the base when the cake icing system is in use. Beneficially this provides stability to the stencil.

The stencil may be resiliently deformable such that it is biased against the liner when in use. In this way the stencils resilience can be used to hold it in place.

The stencil may comprise one or more retaining means to retain the stencil in engagement with the liner. The stencil may have one or more retaining means, for example a catch or inter-engaging formations, which hold the liner in one or more cylinders of differing sizes/cross-sectional areas, for example by holding the liner in positions of differing amounts of overlap.

The cake icing system of the present invention may comprise a cutter for cutting a cake, the cutter comprising a rigid wall with an inner surface, the inner surface defining the width and length of the cutter, and wherein the width of the cutter is less than the width of the base and the length of the cutter is less than the length of the base. The cutter may be used to cut a cake such that the cake will have the same width and length as the width and length of the cutter. As such a cake cut with the cutter has a width and length which is less than the width and length of the base. When a cake which has been cut with the cutter is inserted in the mould there will be an orifice between the liner and the cake, the orifice being suitable for applying an icing composition into.

The cake icing system of the invention may be used to apply icing to a cake.

For the avoidance of doubt the cakes which are suitable for use with the cake icing system of the present invention have been baked prior to their use in the system. The cake must have a sufficient structural stability to support the icing once the icing has been applied.

The cake does not need to be completely covered in icing. The system of the invention may be used to partially cover the cake in icing.

In another aspect the invention relates to a method for icing a cake using the cake icing system of the invention comprising:
(a) providing a cake on the base,
(b) inserting the liner into the mould so that the liner engages with the inner wall of the mould wall,
(c) inserting the base into the mould so that the base sits on the support surface of the mould,
(d) applying an icing composition between the liner and the cake.

The method for icing a cake of the invention comprises providing a cake on the base of the system. The cake preferably has a width which is less than the width of the base and a length which is less than the length of the base.

The method for icing a cake of the invention comprises inserting the liner into the mould so that the liner engages with the inner wall of the mould wall. Inserting the liner may be performed prior to inserting the base into the mould. Inserting of the liner may be performed after inserting the base into the mould. Inserting the liner may be performed simultaneously to inserting the base into the mould.

The method of the invention comprises inserting the base into the mould so that the base sits on the support surface of the mould. The support surface may be a rim positioned at the bottom end of the mould. Wherein the mould has a closed bottom end the support surface may be the closed bottom end.

The method of the invention comprises applying an icing composition between the liner and the cake.

The method of the invention may comprise providing the cutter of the invention. The method may comprise cutting the cake prior to inserting the base into the mould such that the width and length of the cake is substantially the same as the width and length of the cutter. Cutting the cake with the cutter cuts the cake to have a width and length less than the length and the width of the base. Cutting
a cake with the cutter may be performed to size the cake such that a gap is present between the cake and the liner and the gap may be suitable for applying icing into. Cutting the cake may be required if the cake is a larger width and/ or length than the mould.

The method for icing a cake of the invention may comprise allowing the icing to set and subsequently removing the cake from the cake icing system. The icing is set once it has hardened to the point wherein it will not flow under its own weight. Once the icing is set removing the cake from the cake icing system is possible as the icing will retain its shape without being held in place by the cake icing system. The liner prevents the icing from adhering to the mould as the liner forms a barrier which prevents the icing from contacting the mould.

The method for icing a cake of the invention may comprise the side wall of the base retaining the liner against the inner surface of the mould wall. The side wall of the base retaining the liner against the inner surface of the mould wall may provide additional support and stability to the liner when the liner is inserted into the mould.

The method for icing a cake of the invention may comprise inserting the liner into the mould such that the liner engages the support surface of the mould. The engagement of the liner and the support surface may provide additional support and stability to the liner when the liner is inserted into the mould.

The method for icing a cake of the invention may comprise retaining the liner in engagement with the mould wall by use of the retaining member of the invention. The retaining member provides additional support and stability to the liner when the liner is inserted into the mould.

The method for icing a cake of the invention may be performed wherein the icing composition is a flowable icing composition. For example the icing composition may be a buttercream or a ganache. Beneficially the icing being flowable allows the icing to be easily applied between the cake and the liner when performing the method of icing a cake.

### Brief Description of the Drawings

Embodiments of the invention will be described, by way of example only, with reference to the accompanying drawings in which:
**Figure 1** shows the mould, the base and the liner according to an embodiment of the invention ;
**Figure 2** shows a cut away view of the cake icing system of the invention when the system is in use;
**Figure 3** shows a top down view of the liner;
**Figure 4** shows 4 different embodiments of the mould of the cake icing system, **Figure 4A**shows a circular mould, **Figure 4B** shows a square mould, **Figure 4C** shows an oval mould, **Figure 4D** shows a rectangular mould.
**Figure 5** shows an optional cutter for cutting a cake which may be used in the cake icing system.
**Figure 6** shows the method of icing a cake using the cake icing system.
**Figure 7** shows a stencil of the cake icing system.
**Figure 8** shows a cut away view of the cake icing system in use with a stencil engaged with the side of the liner in the mould.
**Figure 9** shows an embodiment of the liner which comprises at least one raised section on the side of the liner opposite to the side which engages the mould wall.

### Detailed Description of the Drawings

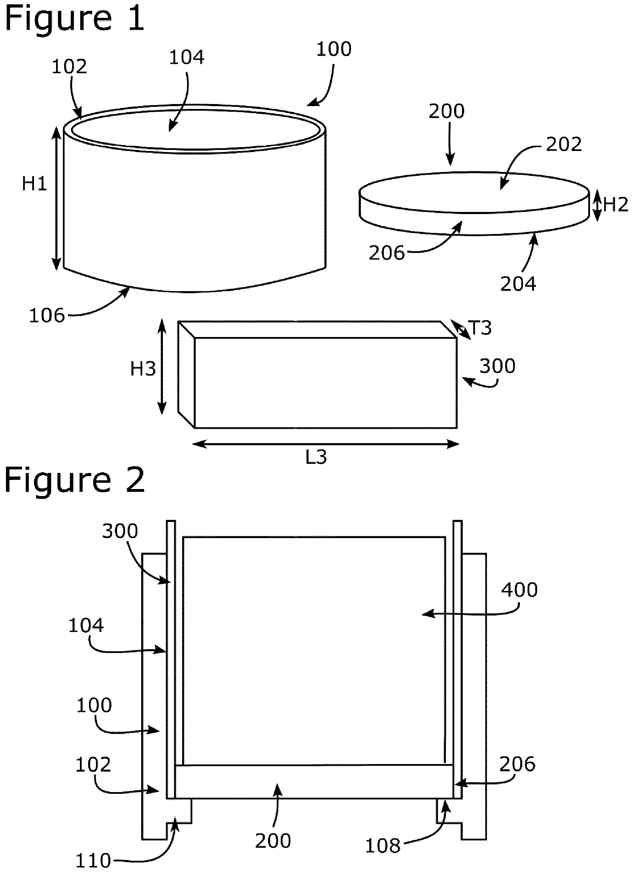

An embodiment of the cake icing system of the invention is shown in Figure 1. A mould 100 is shown wherein the mould 100 is circular. The mould 100 comprises a mould wall 102. The mould wall had an inner surface 104 which defines the width and length of the mould. The mould wall 102 has a support surface at the bottom 106 of the mould. The inner surface 104 has a perimeter length.

The base 200 has a width which is less than the width of the mould 100. The base 200 has a length which is less than the length of the mould 100. As shown in Figure 1 the mould 100 and the base 200 are circular. The length and width of the mould 100 are equal. The length and width of the base 200 are equal and the length and width of the base 200 are less than the length and width of the mould 100. This allows the base 200 to be insertable into the mould 100. The base 200 is also removable from the mould 100.

The base 200 comprises a top surface 202 and a bottom surface 204 and a side surface 206 therebetween. The height H2 of side surface 206 is less than the height H1 of the mould wall 102. The height H1 of the mould wall 102 may be from 2.5 cm to 60 cm. The height H2 of the side surface 206 may be from 2 cm to 8 cm.

The liner 300 of the cake icing system is shown in Figure 1. The liner 300 has a thickness T3, a height H3 and a length L3. The length L3 of the liner 300 is greater than the perimeter length of the inner surface 104 of the mould wall 102 of the mould 100. The liner 300 is shown as rectangular. The liner 300 may also be square in shape. The height H3 of the liner 300 may be from 2.5 cm to 40 cm. The thickness T3 of the liner 300 may be from 0.1 cm to 1 cm.

The liner as shown in Figure 1 is relatively smooth on all sides of the liner 300. Beneficially this means that an icing composition which is iced onto a cake 400 using the cake icing system of the invention will be smooth on the sides of the cake 400. The icing composition will set to conform to the side of the liner 300. As the liner 300 is smooth the icing composition will also be smooth.

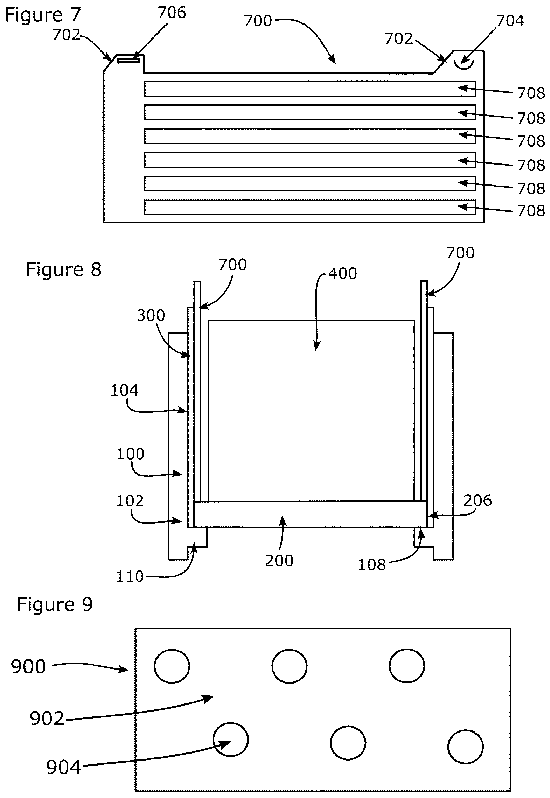

An embodiment of a liner 900 which comprises raised sections 904 is shown in Figure 9. The liner 900 comprises raised sections on the side of the liner 900 which is opposite to the side which engages the mould wall 104. The liner 900 comprises smooth planar sections 902 and raised section 904. The raised sections 904 are shown in Figure 9 are cylindrical. The raised sections may be any suitable shape or design, for example lettering, numbers or graphical designs. The raised sections 904 project from the liner 900 so that when an icing composition is applied between the liner 900 and a cake 400 inserted in the mould 100 the raised section 904 cause the icing to have corresponding sunken areas or imprints in the icing because the icing cannot flow into the areas where the raised sections 904 are. Beneficially the liner 900 allows the sunken designs to be easily formed from an icing composition when it is applied to a cake 400. The raised sections 904 may be detachably attached to the liner 300. The raised sections 904 may be integrally formed from the liner 300, for example moulded or stamped. Where more than one raised section 904 is present the raised sections may be a combination of detachably attached raised sections 904 and integrally formed raised sections 904.

Figure 2 shows a cross section view of the cake icing system when in use. When in use the base 200 sits on the support surface 108 of the mould 100. The support surface 108 is shown in Figure 2 as a rim 110 at the bottom end of the mould 100. Alternatively the support surface 108 may be the bottom 106 of the mould 100 when the bottom 106 of the mould 100 is closed. The rim 110 is configured to project away from the inner surface 104 of the mould wall 102 toward the centre of the mould 100.

The liner 300 engages the inner wall 104 of the mould 100. A cake 400 is shown inserted into the mould 100. The cake is shown sitting on top of the top surface 202 of the base 200. A gap is present between the liner 200 and the cake 400. An icing composition can be applied between the liner 300 and the cake 400.

In Figure 2 the side surface 206 of the base 200 is shown retaining the liner 300 against the inner surface 104 of the mould wall 102. The retention of the liner 300 by the side surface 206 of the base 200 provides stability to the liner 300. The height H2 of the side surface 206 of the base 200 is typically from 2 cm to 8 cm. The liner 300 may engage the inner wall 104 of the mould 100 so that the liner 300 is contacting substantially all of the inner surface 104 of the mould wall 102. The liner 300 may be a pliable sheet. The pliability of the liner 300 allows the liner to be bent in such a manner as to contact substantially all of the inner surface 104 of the mould wall 102. Where the cake icing system is not round the liner 300 may have creases which allow the liner 300 to be folded in such a manner as to contact substantially all of the inner surface 104 of the mould wall 102. The liner 300 is shown sitting on the support surface 108 of the mould 100. In this case the liner 300 is sitting on the rim 110. The liner 300 may also rest on the bottom 106 of the mould 100 when the bottom 106 of the mould 100 is closed and a rim 110 is not present.

According to the invention, the mould 100 and the liner 300 are transparent to the visible light.

The base 200 may be transparent to visible light. This allows the user to observe the icing composition when the icing composition is being applied. The user may find this beneficial to confirm that the icing is forming a complete covering over the cake 400. The mould 100, the base 200, and/ or the liner 300 may be made from a polymer material. Preferably the mould 100, the base 200, and/ or the liner 300 are made from a food safe polymer material.

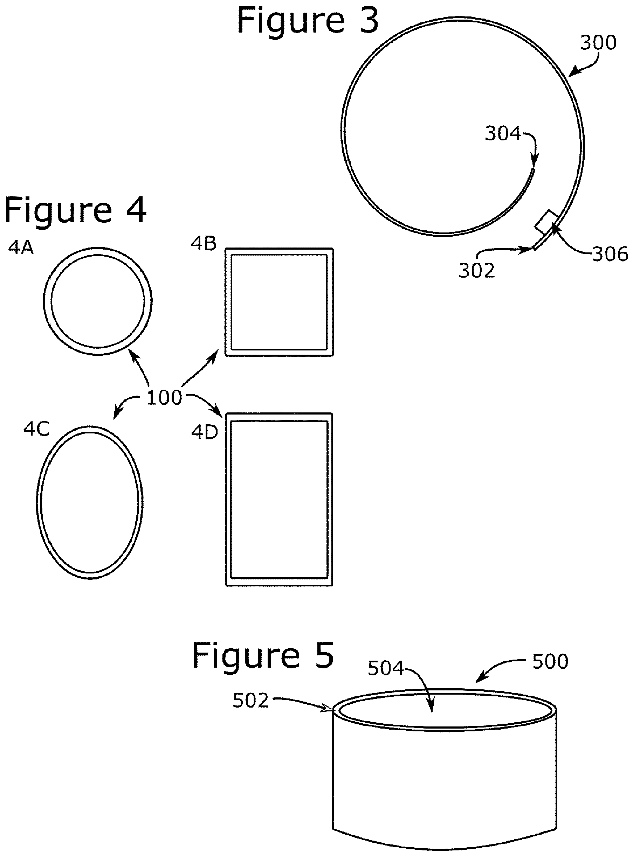

Figure 3 shows a top down view of the liner 300. The liner 300 has a length L3 which is longer than the perimeter length of the mould wall 102. This means that when in use one end 302 of the liner 300 will extend beyond the other end 304 of the liner 300 such that the ends 302, 304 overlap. In the embodiment shown in Figure 3 the liner comprises a retaining member 306 to retain the liner 300 against the mould wall 102. The retaining member 306 may secure the liner 300 to itself when the ends 302, 304 are overlapping.

Figure 4 shows a top down view of the mould 100 of the cake icing system. The mould 100 is shown as circular in Figure 4A, as square in Figure 4B, as oval in Figure 4C, and as rectangular in Figure 4D. The mould 100 may be any other suitable shape. It will be appreciated that the base 200 and an optional cutter 500 will be substantially the same shape as the mould 100. The gap formed between the liner 300 and the cake 400 is substantially the same thickness the entire distance around the cake 400 so that when icing is applied to the cake the icing is of substantially the same thickness around the cake 400.

The mould 100 may have a width and /or a length of from 5 cm to 60 cm. Figures 4A and 4B show a mould 100 wherein the width and length are equal. Figures 4C and 4D should a mould 100 wherein the width and length are unequal.

The mould 100, the base 200, and the liner 300 may be provided in the form of a kit.

The cake icing system of the invention may also comprise a cutter 500 as shown in Figure 5. The cutter 500 may be used to cut the cake 400 into a suitable size to allow the cake 400 to be iced with the cake icing system of the invention. The cutter 500 comprises a rigid wall 502 with an inner surface 504. The inner surface 504 defining the width and length of the cutter 500. The width of the cutter 500 is less than the width of the base 200 and the length of the cutter 500 is less than the length of the base 200. The cake 400 when cut with the cutter 500 will be less wide and less long than the base 200. As such the cake 400 may sit on the base 200 and when the base 200 is inserted into the mould 100 there will be a gap between the inner surface 104 of the mould wall 102. An icing composition may be applied into this gap to ice the cake 400.

Figure 7 shows an embodiment of a stencil 700. The stencil 700 may be formed by cutting out a pattern from a liner 300 as described herein. The stencil 700 may be planar. The stencil 700 has a pattern cut out of it. The pattern shown in Figure 7 is a series of rectangular cut outs 708. Any pattern may be cut out of the stencil 700.

The stencil 700 is shown in Figure 8 engaged with the liner 300 such that the stencil 700 engages with the side of the liner 300 which is opposite to the side of the liner 300 which engages the inner wall 104 of the mould 100. The stencil 700 is nested between the liner 300 and the cake 400. There is a gap between stencil 700 and the cake 400. An icing composition can be applied between the stencil 700 and the cake 400 inserted into the mould 100. It will be appreciated that the icing composition will flow into the pattern cut out of the stencil 700. The icing composition will have different thicknesses in the pattern of the cut outs. Where the icing composition flows through the cut out patterns on the stencil 700 the icing composition will be thicker. The stencil 700 can therefore be used to form three dimensional patterns on from the icing composition on the cake 400. For example when the liner 700 with a pattern of rectangular cut outs 708 is used with the cake icing system the cake will have a series of raised rectangular portions formed from the icing composition.

The stencil 700 may be resiliently deformable such that it is biased by its resilience against the liner 300 when in use. In this way its resilience can hold the stencil 700 in place.

The stencil 700 in Figure 7 is shown comprising a retaining means to which may help retain the stencil 700 in engagement with the liner 300. In the embodiment shown in Figure 7 the retaining means is a pair of tabs 702 which comprise a means for joining the tabs 702 to one another. The means for joining are shown as a flap 704 and slot 706. The flap 704 may be inserted into the slot 706 to help retain the stencil 700 in engagement with the liner 300.

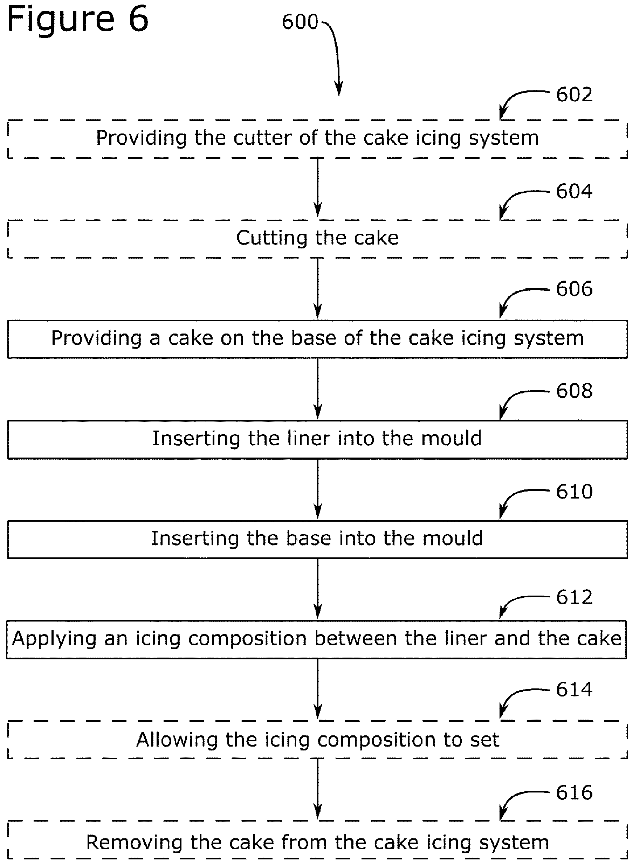

Figure 6 shows the method 600 for icing a cake 400 according to the invention. Optionally the method comprises providing 602 a cutter 500 and cutting 604 the cake 400 prior to inserting the base 200 into the mould 100. The cake 400 is cut 604 such that the width and length of the cake 400 is substantially the same as the width and length of the cutter 500.

The cake 400 is provided 606 on the base 200 of the cake icing system. The method 600 comprises inserting 608 the liner 300 into the mould 100 so that the liner 300 engages with the inner wall 104 of the mould wall 102. The method 600 comprises inserting 610 the base 200 into the mould 100 so that the base 200 sits on the support surface 108 of the mould 100. The method 600 comprises applying 612 an icing composition between the liner 300 and the cake 400. Optionally the method 600 comprises allowing 614 the icing to set and subsequently removing 616 the cake 400 from the cake icing system. The icing composition may be a flowable icing, for example a buttercream or a ganache.

The method 600 may comprise the side wall 206 of the base 200 retaining the liner 300 against the inner surface 104 of the mould wall 102.

The method 600 may comprise inserting 608 the liner 300 into the mould 100 such that the liner 300 engages the support surface 108 of the mould 100. The method 600 may comprise retaining the liner 300 in engagement with the mould wall 104 by use of the retaining member 306.

The words "comprises/comprising" and the words "having/including" when used herein with reference to the present invention are used to specify the presence of stated features, integers, steps or components but do not preclude the presence or addition of one or more other features, integers, steps, components or groups thereof

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. A cake icing system comprising:
(a) a mould (100) comprising a mould wall (102) having a top end and a bottom end and a height defined therebetween, the mould wall (102) having an inner surface (104) which defines the width and the length of the mould, the inner surface (104) having a perimeter length, the mould wall (102) having a support surface (108) at the bottom end of the mould (100),
(b) a base (200) with a width which is less than the width of the mould, a length which is less than the length of the mould, a top surface (202), a bottom surface (204), and a side surface (206) therebetween, wherein the height (H2) of the side surface is less than the height (H1) of the mould wall (102) and the base (200) is removable and insertable into the mould (100),
(c) a liner (300) having a thickness (T3), a height (H3) and a length (L3), wherein the length (L3) is greater than the perimeter length of the mould wall (102),
wherein when the system is in use the base (200) sits on the support surface (108) of the mould (100),
the liner (300) engages the inner wall of the mould (100), such that that an icing composition can be applied between the liner (300) and a cake (400) inserted in the mould (100),
**characterised in that**
in use the side surface (206) of the base (200) retains the liner (300) against the inner surface (104) of the mould wall (102), and
**in that** the mould (100) and the liner (300) are transparent to visible light.

2. The cake icing system of claim 1 wherein the support surface (108) is a rim (110) at the bottom end of the mould (100), the rim (110) being configured to project away from the inner surface (104) of the mould wall (102) toward the centre of the mould (100).

3. The cake icing system of any preceding claim wherein when in use the liner (300) engages the inner wall of the mould (100) so that the liner (300) is contacting substantially all of the inner surface of the mould wall (102).

4. The cake icing system of any preceding claim wherein the liner (300) is a pliable sheet, for example a rectangular or square sheet.

5. The cake icing system of any preceding claim wherein when in use the liner (300) sits on the support surface (108) of the mould (100).

6. The cake icing system of any preceding claim wherein the base (200) is transparent to visible light.

7. The cake icing system of any preceding claim wherein the liner (300) comprises a retaining member to retain the liner (300) against the mould wall (102).

8. The cake icing system of any preceding claim wherein one or more of the following conditions are met:
(a) the width and/ or the length of the mould (100) is from 5 cm to 60 cm;
and/or
(b) the height of the mould wall (102) is from 2.5 cm to 35 cm; and/or
(c) the height of the side surface of the base (200) is from 2 cm to 8 cm;
and/or
(d) the height of the liner (300) is from 2.5 cm to 40 cm; and/or
(e) the thickness of the liner (300) is from 0.1 cm to 1 cm.

9. The cake icing system of any preceding claim wherein the mould (100), base (200), and / or the liner (300) are made from a polymer material.

10. The cake icing system of any preceding clam wherein the mould (100), the base (200), and the liner (300), are provided in the form of a kit.

11. Use of the cake icing system of any preceding claim to apply icing to a cake (400).

12. A method for icing a cake (400) using the system of any of Claims 1 to 10 comprising the steps:
(a) providing a cake (400) on the base (200),
(b) inserting the liner (300) into the mould (100) so that the liner (300) engages with the inner wall of the mould wall (102),
(c) inserting the base into the mould (100) so that the base sits on the support surface of the mould (100),
(d) applying an icing composition between the liner (300) and the cake.

13. The method for icing a cake (400) of claim 12 further comprising one or more of the following:
(a) allowing the icing to set and subsequently removing the cake (400) from the cake icing system;
(b) the side wall of the base retaining the liner against the inner surface of the mould wall (102);
(c) inserting the liner (300) into the mould (100) such that the liner (300) engages the support surface (108) of the mould;
(d) retaining the liner (300) in engagement with the mould wall (102) by use of the retaining member of claim 8;
(e) inserting a stencil (700) into the mould (100) and engaging the stencil (700) with the side of the liner (300) which is opposite to the side of the liner (300) which engages the inner wall of the mould (100).

14. The method for icing a cake (400) of any of claims 12 or 13 wherein the icing composition is a flowable icing or wherein the icing composition is a buttercream or a ganache.

## Patentansprüche

1. Ein System zum Glasieren von Kuchen, das Folgendes aufweist:
(a) eine Form (100), die eine Formwand (102) aufweist, die ein oberes Ende und ein unteres Ende sowie eine dazwischen definierte Höhe hat, wobei die Formwand (102) eine innere Oberfläche (104) hat, die die Breite und die Länge der Form definiert, wobei die innere Oberfläche (104) eine Umfangslänge hat, wobei die Formwand (102) eine Auflagefläche (108) am unteren Ende der Form (100) hat,
(b) eine Basis (200) mit einer Breite, die kleiner ist als die Breite der Form, mit einer Länge, die kleiner ist als die Länge der Form, mit einer oberen Oberfläche (202), mit einer unteren Oberfläche (204) und einer seitlichen Oberfläche (206) dazwischen, wobei die Höhe (H2) der seitlichen Oberfläche geringer ist als die Höhe (H1) der Formwand (102) und wobei die Basis (200) entfernbar und in die Form (100) einsetzbar ist,
(c) ein Liner (300) mit einer Dicke (T3), mit einer Höhe (H3) und mit einer Länge (L3), wobei die Länge (L3) größer ist als die Umfangslänge der Formwand (102),
wobei, bei Verwendung des Systems, die Basis (200) auf der Auflagefläche (108) der Form (100) sitzt,
wobei der Liner (300) an der Innenwand der Form (100) anliegt, so dass eine Glasurmasse zwischen den Liner (300) und einem in die Form (100) eingesetzten Kuchen (400) aufgetragen werden kann,
**dadurch gekennzeichnet, dass**
bei Verwendung die seitliche Oberfläche (206) der Basis (200) den Liner (300) gegen die innere Oberfläche (104) der Formwand (102) gedrückt hält, und dadurch, dass
die Form (100) und der Liner (300) für sichtbares Licht transparent sind.

2. Das System zum Glasieren von Kuchen nach Anspruch 1, wobei die Auflagefläche (108) ein Rand (110) am unteren Ende der Form (100) ist, wobei der Rand (110) so konfiguriert ist, dass er von der inneren Oberfläche (104) der Formwand (102) in Richtung der Mitte der Form (100) vorsteht.

3. Das System zum Glasieren von Kuchen nach einem der vorhergehenden Ansprüche, wobei der Liner (300) bei Verwendung an der Innenwand der Form (100) anliegt, so dass der Liner (300) im Wesentlichen die gesamte innere Oberfläche der Formwand (102) berührt.

4. Das System zum Glasieren von Kuchen nach einem der vorhergehenden Ansprüche, wobei der Liner (300) eine biegsame Folie ist, beispielsweise eine rechteckige oder quadratische Folie.

5. Das System zum Glasieren von Kuchen nach einem der vorhergehenden Ansprüche, wobei der Liner (300) bei Verwendung auf der Auflagefläche (108) der Form (100) sitzt.

6. Das System zum Glasieren von Kuchen nach einem der vorhergehenden Ansprüche, wobei die Basis (200) für sichtbares Licht transparent ist.

7. Das System zum Glasieren von Kuchen nach einem der vorhergehenden Ansprüche, wobei der Liner (300) ein Halteelement aufweist, um den Liner (300) an der Formwand (102) gedrückt zu halten.

8. Das System zum Glasieren von Kuchen nach einem der vorhergehenden Ansprüche, wobei eine oder mehrere der folgenden Bedingungen erfüllt sind:
(a) die Breite und/oder die Länge der Form (100) beträgt 5 cm bis 60 cm; und/oder
(b) die Höhe der Formwand (102) beträgt 2,5 cm bis 35 cm; und/oder
(c) die Höhe der seitlichen Oberfläche der Basis (200) beträgt zwischen 2 cm und 8 cm; und/oder
(d) die Höhe des Liners (300) beträgt zwischen 2,5 cm und 40 cm;
und/oder
(e) die Dicke des Liners (300) beträgt zwischen 0,1 cm und 1 cm.

9. Das System zum Glasieren von Kuchen nach einem der vorhergehenden Ansprüche, wobei die Form (100), die Basis (200) und/oder der Liner (300) aus einem Polymermaterial hergestellt sind.

10. Das System zum Glasieren von Kuchen nach einem der vorhergehenden Ansprüche, wobei die Form (100), die Basis (200) und der Liner (300) in Form eines Bausatzes bereitgestellt sind.

11. Verwendung des Systems zum Glasieren von Kuchen nach einem der vorhergehenden Ansprüche zum Auftragen von Glasur auf einen Kuchen (400).

12. Ein Verfahren zum Glasieren eines Kuchens (400) unter Verwendung des Systems nach einem der Ansprüche 1 bis 10, das die folgenden Schritte aufweist:
(a) Bereitstellen eines Kuchens (400) auf der Basis (200),
(b) Einführen des Liners (300) in die Form (100), so dass der Liner (300) mit der Innenwand der Formwand (102) in Eingriff kommt,
(c) Einführen der Basis in die Form (100), so dass die Basis auf der Auflagefläche der Form (100) sitzt,
(d) Aufbringen einer Glasurmasse zwischen dem Liner (300) und dem Kuchen.

13. Das Verfahren zum Glasieren eines Kuchens (400) nach Anspruch 12, das ferner einen oder mehrere der folgenden Schritte aufweist:
(a) Aushärtenlassen der Glasur und anschließendes Entnehmen des Kuchens (400) aus dem System zum Glasieren von Kuchen;
(b) wobei die Seitenwand der Basis den Liner gegen die innere Oberfläche der Formwand (102) gedrückt hält;
(c) Einführen des Liners (300) in die Form (100), so dass der Liner (300) in die Auflagefläche (108) der Form eingreift;
(d) Halten des Liners (300) in Eingriff mit der Formwand (102) unter Verwendung des Halteelements nach Anspruch 8;
(e) Einführen einer Schablone (700) in die Form (100) und Ineingriffbringen der Schablone (700) mit der Seite des Liners (300), die der Seite des Liners (300) gegenüberliegt, die mit der Innenwand der Form (100) in Eingriff steht.

14. Das Verfahren zum Glasieren eines Kuchens (400) nach einem der Ansprüche 12 oder 13, wobei die Glasur eine fließfähige Glasur ist oder wobei die Glasur eine Buttercreme oder eine Ganache ist.

## Revendications

1. Système de glaçage de gâteau comprenant :
(a) un moule (100) avec une paroi de moule (102) ayant une extrémité supérieure et une extrémité de fond et une hauteur définie entre les deux, la paroi de moule (102) ayant une surface intérieure (104) qui définit la largeur et la longueur du moule, la surface intérieure (104) ayant une longueur de périmètre, la paroi de moule (102) ayant une surface de support (108) à l'extrémité de fond du moule (100),
(b) une base (200) avec une largeur qui est inférieure à la largeur du moule, une longueur qui est inférieure à la longueur du moule, une surface supérieure (202), une surface de fond (204) et une surface latérale (206) entre celles-ci, la hauteur (H2) de la surface latérale étant inférieure à la hauteur (H1) de la paroi de moule (102) et la base (200) pouvant être enlevée et insérée dans le moule (100),
(c) une doublure (300) ayant une épaisseur (T3), une hauteur (H3) et une longueur (L3), la longueur (L3) étant supérieure à la longueur du périmètre de la paroi de moule (102),
lorsque le système est utilisé, la base (200) étant assise sur la surface de support (108) du moule (100),
la doublure (300) s'engageant sur la paroi intérieure du moule (100), de façon qu'une composition de glaçage puisse être appliquée entre la doublure (300) et un gâteau (400) inséré dans le moule (100),
**caractérisé en ce que**, en utilisation, la surface latérale (206) de la base (200) maintient la doublure (300) contre la surface intérieure (104) de la paroi de moule (102) et
**en ce que** le moule (100) et la doublure (300) sont transparents pour la lumière visible.

2. Système de glaçage de gâteau selon la revendication 1, la surface de support (108) étant un bord (110) à l'extrémité de fond du moule (100), le bord (110) étant configuré pour s'étendre en éloignement de la surface intérieure (104) de la paroi de moule (102) vers le centre du moule (100).

3. Système de glaçage de gâteau selon l'une des revendications précédentes, lors de son utilisation, la doublure (300) s'appuyant sur la paroi intérieure du moule (100) de façon que la doublure (300) soit en contact sensiblement total de la surface intérieure de la paroi de moule (102).

4. Système de glaçage de gâteau selon l'une des revendications précédentes, la doublure (300) étant une feuille pliante, par exemple une feuille rectangulaire ou carrée.

5. Système de glaçage de gâteau selon l'une des revendications précédentes, lors de son utilisation, la doublure (300) étant posée sur la surface de support (108) du moule (100).

6. Système de glaçage de gâteau selon l'une des revendications précédentes, la base (200) étant transparente à la lumière visible.

7. Système de glaçage de gâteau selon l'une des revendications précédentes, la doublure (300) comprenant un élément de maintien pour maintenir la doublure (300) contre la paroi de moule (102).

8. Système de glaçage de gâteau selon l'une des revendications précédentes, une ou plusieurs des conditions suivantes étant remplies :
(a) la largeur et/ou la longueur du moule (100) est de 5 cm à 60 cm ; et/ou
(b) la hauteur de la paroi de moule (102) est de 2,5 cm à 35 cm ; et/ou
(c) la hauteur de la surface latérale de la base (200) est de 2 cm à 8 cm ; et/ou
(d) la hauteur de la doublure (300) est de 2,5 cm à 40 cm ; et/ou
(e) l'épaisseur de la doublure (300) est de 0,1 cm à 1 cm.

9. Système de glaçage de gâteau selon l'une des revendications précédentes, le moule (100), la base (200) et la doublure (300) étant faits en un matériau polymère.

10. Système de glaçage de gâteau selon l'une des revendications précédentes, le moule (100), la base (200) et la doublure (300) étant fournis sous la forme d'un ensemble.

11. Utilisation du système de glaçage de gâteau selon l'une des revendications précédentes pour appliquer le glaçage à un gâteau (400).

12. Procédé de glaçage d'un gâteau utilisant le système selon l'une des revendications 1 à 10, comprenant les étapes :
(a) fournir un gâteau (400) sur la base (200),
(b) insérer la doublure (300) dans le moule (100) de façon que la doublure (300) s'engage avec la paroi intérieure de la paroi de moule (102),
(c) insérer la base dans le moule (100) de façon que la base soit assise sur la surface de support du moule (100),
(d) appliquer une composition de glaçage entre la doublure (300) et le gâteau.

13. Procédé de glaçage de gâteau selon la revendication 12, comprenant une ou plusieurs des suivantes :
(a) permettre au glaçage de se poser et e,suite retirer le gâteau (400) du système de glaçage de gâteau ;
(b) la paroi latérale de la base maintenant la doublure contre la surface intérieure de la paroi de moule (102) ;
(c) insérer la doublure (300) dans le moule (100) de façon que la doublure (300) entre en contact avec la surface de support (108) dans le moule ;
(d) maintenir la doublure (300) en engagement avec la paroi de moule (102) en utilisant l'élément de maintien de la revendication 8 ;
(e) insérer un pochoir (700) dans le moule (100) et faire le pochoir (700) entrer en contact avec le côté de la doublure (300) qui est opposé au côté de la doublure (300) qui est en contact avec la paroi intérieure du moule (100).

14. Procédé de glaçage d'un gâteau (400) selon l'une des revendications 12 ou 13, la composition de glaçage étant un glaçage fluide ou la composition de glaçage étant une crème de beurre ou une ganache.
